# EUROPEAN PATENT APPLICATION

(11) **EP 0 916 563 A1**
(43) Date of publication of application: **19.05.1999**
(21) Application number: 98830640.3
(22) Date of filing: 23.10.1998
(51) Int. Cl.: B62B 5/06, B62B 3/14

(54) **Supermarket trolley**

(30) Priority: 27.10.1997 IT TO970212 U
(71) Applicant: Comital S.R.L., 12042 Bra (IT)
(72) Inventor: Bergia, Michelangelo, 12030 Cavallermaggiore (Cueno) (IT)
(74) Representative: Buzzi, Franco

(57) **Abstract**

A supermarket trolley (1) comprising a base (2) with castor wheels (3) bearing a basket container (5), and a horizontal bar (6,7) providing a push handle of the trolley (1). The horizontal bar includes an at least partially transparent outer tubular member (7).

## Description

The present invention is generally related to supermarket trolleys comprising a wheeled base bearing a basket container, and a horizontal bar providing a push handle of the trolley.

A supermarket trolley of the above-referenced type is disclosed and illustrated, for instance, in International patent application WO 97/30880 in the name of the same Applicant.

The supermarket trolley according to the invention is characterised in that said horizontal bar includes an at least partially transparent outer tubular member.

The utility deriving from the above feature resides in that the horizontal bar of the trolley can be to advantage employed to fit advertising material within the transparent outer tubular member. This advertising material, which may simply consist of a paper or cardboard sheet having a shape complementary to that of the transparent tubular member, is thus immediately visible to the users of the trolley. Accordingly the supermarket trolley of the invention enables providing a most efficient effect of advertising vehicle, at a very low cost.

Preferably the transparent outer tubular member is quickly releasable, so as to allow periodical replacement of the advertising material therewithin.

The invention will now be disclosed in detail with reference to the accompanying drawings, purely provided by way of non limiting example, in which:

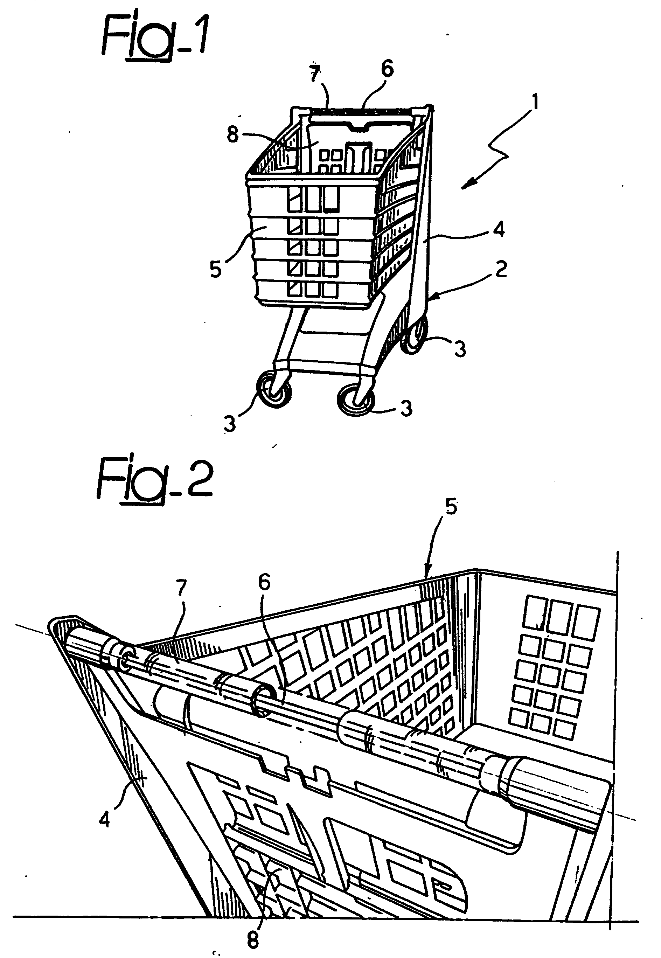

- Figure 1 is a diagrammatic front perspective view of a supermarket trolley according to the invention, and
- Figure 2 is a partial and enlarged rear perspective view of the trolley.

In the drawings, reference numeral 1 generally designates a supermarket trolley according to the invention. Conveniently, but not necessarily, the trolley 1 may be provided with a moulded plastic material structure. For instance, the trolley 1 may be corresponding to that disclosed and illustrated in international patent application wO 97/30880 in the name of the same Applicant.

In this case, the trolley 1 comprises a base 2 with castor wheels 3 and formed integrally with a rear support 4 to which a basket container 5, also made of moulded plastic material, is connected.

The basket container 5 and the support 4 of the base 2 are mutually connected superiorly by a tie rod 6 coaxially fitted through a horizontal push handle 7 consisting of a tubular bar.

According to the invention, the tubular bar 7 is at least partially transparent.

According to already mentioned international patent application WO 97/38180 the tubular bar 7, which is quickly removable, acts in addition to a push handle of the trolley 1 also as a pivot support for a rear swinging wall 8 of the basket container 5, as well as a support for a foldable baby seat.

The transparent arrangement of the tubular bar 7 enables employing the push handle of the trolley 1 for insertion therewithin of advertising material which is immediately visible to the user. In addition to this practical advantage, utility deriving from the transparent conformation of the push handle 7 also consists in achieving a unique aestetical result.

Naturally the provision of the transparent tubular member according to the invention can be extended also to supermarket trolleys whose arrangement, shape and materials are different than those disclosed by way of the example in the above.

## Claims

1. Supermarket trolley (1), comprising a wheeled base (2,3) bearing a basket container (5), and a horizontal bar (6,7) providing a push handle of the trolley (1), characterised in that said horizontal bar includes an at least partially transparent outer tubular member (7).

2. Trolley according to claim 1, characterised in that said at least partially transparent outer tubular member (7) is quickly releasable.

3. Trolley according to claim 1 or claim 2, characterised in that a tie rod (6) connecting the basket container (5) to a support (4) of the base (2) is fitted within said at least partially transparent outer tubular member (7).

4. Trolley according to any of the preceding claims, characterised in that said at least partially transparent outer tubular member (7) also provides a pivot support for a rear swinging wall of the basket container (5) as well as a support for a foldable baby seat.

5. Trolley according to any of the preceding claims, characterised in that said at least partially transparent outer tubular member (7) is made of plastic material.
